# EUROPÄISCHE PATENTANMELDUNG

(11) **EP 1 953 248 A1**
(43) Veröffentlichungstag der Anmeldung: **06.08.2008**
(21) Anmeldenummer: 07010869.1
(22) Anmeldetag: 01.06.2007
(51) Int. Cl.: C14C 11/00, A01K 13/00

(54) **Thermo-Fellteil zur Anlage und lokalen Wärmebeeinflussung von Körperflächen von Lebewesen**

(30) Priorität: 05.02.2007 DE 102007006413
(71) Anmelder: GLL Garantie Lederreinigungs- und Lederbearbeitungs-GmbH, 92339 Beilngries (DE)
(72) Erfinder: Kreisl, Birgit, 92339 Beilngries (DE); Alabiso, Claudia, 92339 Beilngries (DE)
(74) Vertreter: Liebl, Thomas

(57) **Zusammenfassung**

Die Erfindung betrifft ein Thermo-Fellteil zur Anlage und lokalen Wärmebeeinflussung von Körperflächen von Lebewesen, insbesondere von Menschen und warmblütigen Tieren, wobei das Thermo-Fellteil (7) eine Fellhaarseite (31) und eine Lederhautseite (29) aufweist. Erfindungsgemäß ist auf der Lederhautseite (29) des Thermo-Fellteils (7) eine flächige metallisierte Beschichtung (23) aufgebracht.

## Beschreibung

Die Erfindung betrifft ein Thermo-Fellteil zur Anlage und lokalen Wärmebeeinflussung von Körperflächen von Lebewesen, insbesondere von Menschen und warmblütigen Tieren nach dem Oberbegriff des Anspruchs 1.

Es ist seit Alters her bekannt, Fellteile von Tieren zu gerben und als Thermo-Fellteile durch Anlegen an Körperflächen von Menschen und Tieren zur Wärmebeeinflussung zu nutzen. Insbesondere ist die Verwendung solcher Thermo-Fellteile bei Bekleidungsstücken bekannt. Bei Pelzmänteln wird beispielsweise die Fellhaarseite nach außen getragen. Bei pelzgefütterten Bekleidungsstücken weist dagegen die Fellhaarseite nach innen zur Körperfläche und die nach außen gerichtete Lederhautseite des Thermo-Fellteils ist meist durch einen Textilstoff abgedeckt. Die Fellhaarseite liegt dabei regelmäßig nicht unmittelbar auf der Körperfläche auf, sondern zwischen Körperfläche und Fellhaarseite werden meist textile Bekleidungsstücke, wie Unterwäsche, Hemden, Jacken etc. getragen. Bei der vorstehenden bekannten Verwendung von Thermo-Fellteilen wird im Wesentlichen deren hohe Wärmedämmfunktion ausgenützt, so dass die abgedeckten Körperflächen bei tiefen Außentemperaturen angenehm warm gehalten werden.

Weiter ist die Verwendung von Thermo-Fellteilen in Form von Bandagenteilen allgemein bekannt. Solche Thermo-Bandagenteile werden insbesondere zur Linderung von Gelenkbeschwerden eingesetzt, wobei vorzugsweise Feinhaarfelle verwendet werden, die mit der Fellhaarseite unmittelbar auf der Körperfläche getragen werden. Auch hier wird einerseits die Wärmedämmung der Fellhaarseite ausgenützt und andererseits durch eine Reizstimulation auf die Haut die Durchblutung gefördert, so dass insgesamt eine positive Wärmebeeinflussung im Bereich der Anlagefläche erfolgt.

Weiter ist aus der DE 201 14 377 U1 eine Pferde-Thermogamasche bekannt, die einen durch Verschlussmittel um ein Pferdebein herum schließbaren Mantel und eine in diese eingesetzte Einlage aufweist, die wärmeabgebende Eigenschaften besitzt. Die Einlage besteht aus einem eingeschlossenen Gel, welche in einem Kühlschrank gekühlt werden kann und vorrangig dazu verwendet wird, ein Pferdebein nach strapaziösem Einsatz zu kühlen. Die Geleinlage kann jedoch auch als Wärmespeicher benutzt werden und nach dem Aufladen in einem Heizgerät zum Warmhalten eines Pferdebeins verwendet werden. Die Handhabung ist dabei ersichtlich aufwendig und unbequem. Zudem besitzt eine solche Geleinlage nur eine relativ geringe Wärmespeicherkapazität, so dass die Wärmebeeinflussung nur von kurzer Dauer ist.

Aufgabe der Erfindung ist es demgegenüber ein gattungsgemäßes Thermo-Fellteil so weiterzubilden, dass damit eine gesteigerte Wärmebeeinflussung von Körperflächen von Lebewesen, insbesondere von Menschen und warmblütigen Tieren möglich ist.

Diese Aufgabe wird mit den Merkmalen des Anspruchs 1 gelöst.

Gemäß Anspruch 1 ist auf der Lederhautseite des Thermo-Fellteils eine flächige metallisierte Beschichtung aufgebracht.

Das erfindungsgemäße Thermo-Fellteil hat für eine lokale Wärmebeeinflussung an der Anlagefläche die an sich bekannte Wärmedämmfunktion. Zudem tritt, insbesondere bei einem natürlichen Feinhaarfell und bei Bewegungen eine hohe elektrostatische Aufladung auf, deren stimulierende Wirkung auf die Körperfläche im Anlagebereich grundsätzlich ebenfalls bekannt ist. Allerdings wird durch die erfindungsgemäße flächige metallisierte Beschichtung dieser Effekt wesentlich gesteigert, da die elektrostatische Aufladung nicht nach außen, sondern nach innen zur Körperfläche hin abfließt und dort die lokale Wärmebeeinflussung, insbesondere auch durch eine hyperämisierende Wirkung steigert. Ein salz- d. h. elektrolythaltiger Schweiß, der von der Körperfläche abgegeben wird, kann den Effekt der Wärmebeeinflussung für ein gesteigertes Wohlbefinden und/oder bei einer klinischen Indikation steigern.

Eine besonders geeignete Zusammensetzung der metallisierten Beschichtung wird nach Anspruch 2 mit einer Pulvermischung aus mindestens zwei verschiedenen elementaren Metallen erreicht.

Experimentell wurden besonders gute Effekte mit einer Pulvermischung nach Anspruch 3 erzielt, die Kupferpartikel und Aluminiumpartikel enthält. Hier war nach Anspruch 4 eine Zusammensetzung aus ½ Kupferanteil, ¼ Aluminiumanteil und ¼ Bindermischungsanteil aus Binder und Weichmacher für besonders hohe Wirkungsgrade ermittelt worden.

Für eine preisgünstige Herstellung in Verbindung mit einer für die Funktion günstigen geschlossen durchgehenden Oberfläche wird mit Anspruch 5 vorgeschlagen, dass die metallisierte Beschichtung aufkaschiert wird.

Grundsätzlich kann die beschriebene Wirkung mit unterschiedlichen Thermo-Fellteilen erreicht werden. Besonders geeignet sind jedoch Feinhaarfellteile, welche für eine hohe elektrostatische Aufladung ermöglichen. Dabei können alle Arten von Feinhaarfellteilen, auch künstliche Feinhaarfellteile verwendet werden. Der erfindungsgemäße Effekt tritt jedoch besonders stark auf, wenn nach Anspruch 7 ein natürliches Feinhaarfellteil, insbesondere ein Schaffell oder ein Katzenfell verwendet wird.

In einer Weiterbildung des erfindungsgemäßen Thermo-Fellteils wird diesem nach Anspruch 8 eine Trägerschicht zugeordnet, auf der das Thermo-Fellteil mit seiner Lederhautseite verbunden, vorzugsweise vernäht oder verklebt ist. Dadurch werden insbesondere dünne Feinhaarfellteile mechanisch stabilisiert und belastbarer, so dass damit zweilagige Thermoeinlageteile oder Thermobandagenteile oder Thermobekleidungsteile herstellbar sind, die bei langen Lebensdauern hoch belastbar sind. Eine solche Trägerschicht kann nach Anspruch 9 bevorzugt aus einem Textilstoff und/oder einem Kernleder gebildet werden. Grundsätzlich sind jedoch auch andere Trägerschichten aus elektrisch nicht leitendem Material möglich.

Ein erfindungsgemäßes Thermo-Fellteil in Verbindung mit einer Trägerschicht kann zu einer Schuheinlagesohle nach Anspruch 10 verarbeitet werden, die hervorragende Wärmeeigenschaften hat. Solche Schuheinlagesohlen können somit bevorzugt im Wintersport, bei Jägern, bei Berufen mit einer Wintertätigkeit im Freien, etc. eingesetzt werden. Dies ist auch der bevorzugte Einsatzbereich, der mit Anspruch 11 beanspruchten Thermobekleidung, die aber auch generell für jeden Aufenthalt im Freien bei niedrigen Temperaturen hervorragend geeignet ist.

Die mit Anspruch 12 beanspruchten Thermobandagenteile sowie Thermogurte und Thermobänder können sowohl für eine angenehme Gelenk- und Körperteilerwärmung genutzt werden, sind jedoch vorrangig auch für medizinische Indikationen, beispielsweise bei Entzündungen oder rheumatischen Beschwerden zu deren Linderung einsetzbar.

Ein besonders bevorzugter Verwendungsfall des erfindungsgemäßen Thermo-Fellteils ist die Pferde-Thermogamasche nach Anspruch 13. Diese ist mantelartig um ein Bein eines Pferdes gelegt. Dabei überlappt sie längsrandseitig und ist mit wenigstens einem Querverschluss, vorzugsweise mit drei gegeneinander versetzten an einer Trägerschicht aus Kernleder angebrachten Klettverschlüssen fixierbar.

Der Einsatz einer solchen Pferde-Thermogamasche erfolgt bevorzugt an den Röhrenknochen der Vorderbeine des Pferdes, da diese in Ruhe im Vergleich zur normalen Körpertemperatur des Pferdes bis zu 10°C kühler sein können. An den Hinterbeinen tritt diese Tatsache in dem erwähnten Maße nicht so stark auf. Pferde stehen den größten Teil des Tages im Stall, wodurch die Gliedmaßen unterkühlt, unelastisch und verspannt sind. Durch langsame Bewegungen müssen die Gliedmaßen erst aufgewärmt und belastbar für das Reiten gemacht werden. Durch ein prophylaktisches Anbringen der erfindungsgemäßen Pferde-Thermogamaschen sind die Pferdebeine vor der Belastung schon erwärmt, elastischer und die Unfallgefahr wird gemindert. Die Pferde-Thermogamaschen sind daher vorrangig in Ruhepausen im Stall anzulegen und werden dann vor dem Reiten wieder abgenommen. Es handelt sich somit bei den erfindungsgemäßen Pferde-Thermogamaschen in erster Linie nicht um an sich bekannte Spring- bzw. Schutzgamaschen, wobei jedoch die erfindungsgemäßen Pferde-Thermogamaschen auch für eine solche Funktion nicht zwangsläufig beim Reiten abgenommen zu werden brauchen.

Zusätzlich zur vorstehenden Funktion einer verbesserten Vorbereitung des Pferds auf den Reitbetrieb, liegt eine alternative Verwendung der Pferde-Thermogamasche in der klinischen Indikation. Bei chronischen Sehnen, akuten Sehnenscheidenentzündungen, Atrithiden und Purithiden kann die Pferde-Thermogamasche hymärisierend, schmerzlindernd und resorbierend wirken. Auch lindert die Pferde-Thermogamasche den Schmerz, der nicht durch eine Entzündung, sondern durch eine Sauerstoffnot der Zellen, beispielsweise in Muskeln entstand.

Nachfolgend sind zwei Ausführungsbeispiele der Erfindung anhand der beigefügten Figuren gezeigt.

Es zeigen:
- Fig. 1: in einer perspektivischen Ansicht als erstes Ausführungsbeispiel eine erfindungsgemäße Beingamasche als Pferde-Thermogamasche,
- Fig. 2: in einer Schnittansicht durch die Pferde-Thermogamasche nach Fig. 1 mit einem Feinhaarfell, einer Beschichtung, die eine Pulvermischung aus Kupfer und Aluminium enthält, und einer Trägerschicht,
- Fig. 3: eine vergrößerte Teilansicht aus Fig. 2, und
- Fig. 4: in einer perspektivischen Ansicht als zweites Ausführungsbeispiel ein erfindungsgemäßes Thermo-Einlageteile als Einlegesohle für einen Schuh.

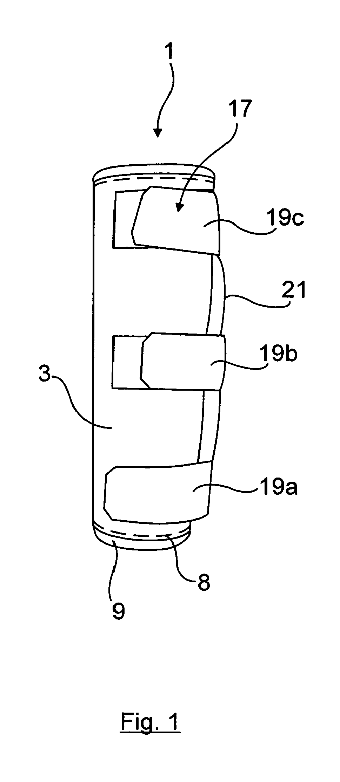

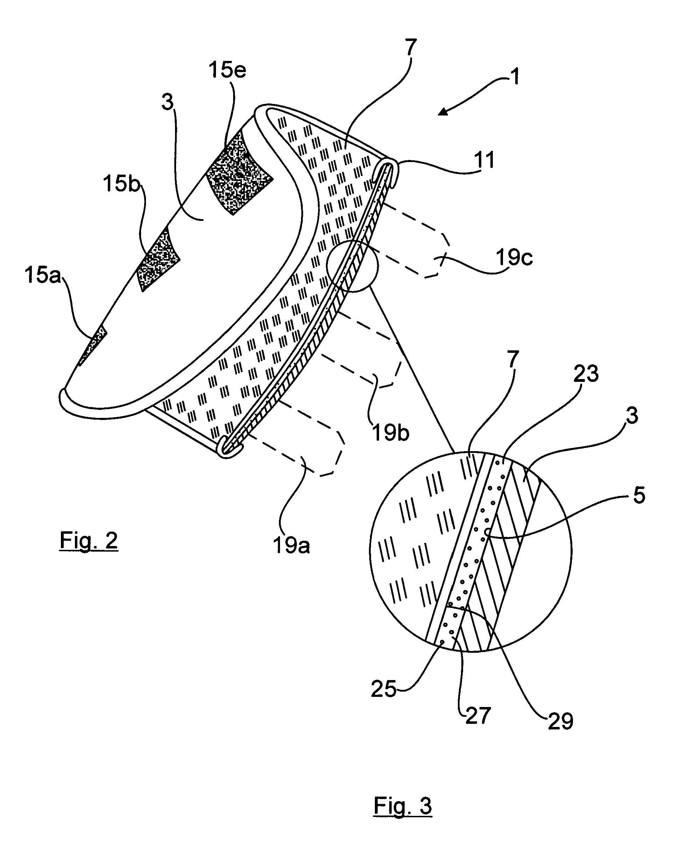

In der Fig. 1 ist eine Pferde-Thermogamasche 1 in einer geschlossenen Stellung und in Fig. 2 (mit einem teilweisen Randschnitt) in einer offenen Stellung gezeigt. Die Pferde-Thermogamasche 1 weist eine Trägerschicht 3 auf, die aus Leder d. h. vorzugsweise aus Kernleder hergestellt ist. Mit der Trägerschicht 3 ist auf einer dem Pferdebein zuzuwendenden Innenseite 5 der Trägerschicht 3 ein Thermo-Fellteil als Feinhaarfell 7 mit seiner Lederhautseite verbunden. Das Feinhaarfell 7 ist mittels Fäden 8 an einem umlaufenden Rand 9 der Trägerschicht 3 aufgenäht. Als formgebender Randabschluss umschließt ein Abnäher 11 (in Fig. 2 im Schnitt dargestellt) im Bereich des Randes 9 sowohl die Trägerschicht 3 als auch das Feinhaarfell 7. An einer Außenseite 13 der Trägerschicht 3 sind erste Teile 15a, 15b, 15c dreier Klettverschlussbänder 17 aufgenäht. Zweite Teile 19a, 19b, 19c (im Randschnitt der Fig. 2 strichliert angedeutet), die in einer schließenden Zusammenfügung mit den ersten Teilen 15a, 15b, 15c zusammenwirken, sind an einem seitlichen Rand 21 der Trägerschicht 3 angenäht. In der in Fig. 1 dargestellten geschlossenen Stellung greifen die zweiten Teile 19a, 19b, 19c in die ersten Teile 15a, 15b, 15c ein, so dass die Thermogamasche 1 gegen unbeabsichtigtes Lösen gesichert ist.

Die Verwendung von Klettverschlussbändern 17 hat den Vorteil, dass zusätzlich zur einfachen und schnellen Verbindung die Pferde-Thermogamasche 1 stufenlos in unterschiedlichen Durchmessergrößen fixierbar und folglich verschieden großen Pferdebeinen anpassbar ist.

In Fig. 2 ist der Schichtaufbau in einer Schnittansicht durch die Thermogamasche 1 und zusätzlich in einer vergrößerten Darstellung (Fig. 3) als Ausbruch gezeigt. Auf der Lederhautseite 29 des Feinhaarfells 7, zwischen der Trägerschicht 3 und dem Feinhaarfell 7 ist eine metallisierte Beschichtung 23 aufgebracht. Die Beschichtung 23 besteht aus einer Mischung von Kupferpartikeln 25 und Aluminiumpartikeln 27 sowie einem Bindemittel und ist auf der Rückseite bzw. der Lederhautseite 29 des Feinhaarfells 7 vollflächig aufgetragen.

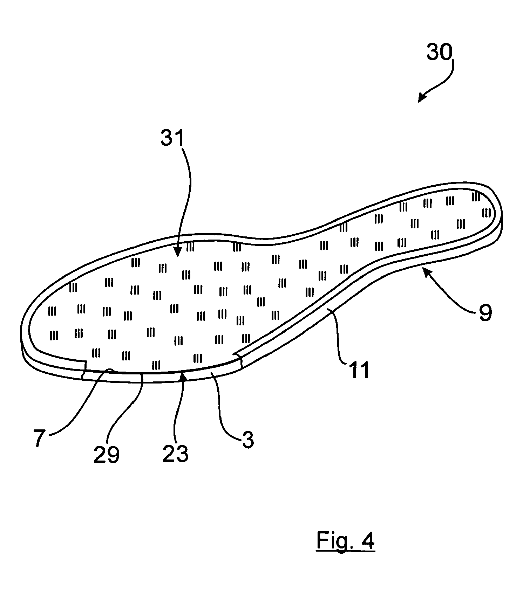

Fig. 4 zeigt in einer perspektivischen Ansicht eine Einlegesohle 30 für einen Schuh. Die Einlegesohle hat den prinzipiell gleichen Aufbau wie die vorstehend beschriebene Pferde-Thermogamasche 1. Der Körperfläche eines Menschen ist hier die Fellhaarseite 31 des Feinhaarfells 7 als Sohlenoberseite zugewandt. Das Feinhaarfell 7 trägt an der unteren Lederhautseite 29 vollflächig die metallisierte Beschichtung 23 mit einem ½ Kupferpartikelanteil 25 und ¼ Aluminiumpartikelanteil 27. Als Sohlenunterschicht ist eine Trägerschicht 3 aus stabilem Leder verwendet, das mit dem Feinhaarfell 7 verbunden, beispielsweise mit der Lederhautseite 29 verklebt ist. Der Rand 9 der Einlegesohle 30 ist von einem Abnäher 11 umgeben, der im vorderen Sichtbereich zur Darstellung des Sohlenaufbaus in einem teilweisen Randschnitt aufgeschnitten ist.

## Patentansprüche

1. Thermo-Fellteil zur Anlage und lokalen Wärmebeeinflussung von Körperflächen von Lebewesen, insbesondere von Menschen und warmblütigen Tieren, wobei das Thermo-Fellteil (7) eine Fellhaarseite (31) und eine Lederhautseite (29) aufweist
**dadurch gekennzeichnet,**
**dass** auf der Lederhautseite (29) des Thermo-Fellteils (7) eine flächige metallisierte Beschichtung (23) aufgebracht ist.

2. Thermo-Fellteil nach Anspruch 1, **dadurch gekennzeichnet, dass** die metallisierte Beschichtung (23) eine Pulvermischung aus mindestens zwei verschiedenen elementaren Metallen (25, 27) enthält.

3. Thermo-Fellteil nach Anspruch 2, **dadurch gekennzeichnet, dass** die Pulvermischung Kupferpartikel (25) und Aluminiumpartikel (27) enthält.

4. Thermo-Fellteil nach Anspruch 3, **dadurch gekennzeichnet, dass** die metallisierte Beschichtung aus ½ Kupferanteil (25), ¼ Aluminiumanteil (27) und ¼ Bindermischungsanteil aus Binder und Weichmacher besteht.

5. Thermo-Fellteil nach einem der Ansprüche 1 bis 4, **dadurch gekennzeichnet, dass** die metallisierte Beschichtung (23) aufkaschiert ist.

6. Thermo-Fellteil nach einem der Ansprüche 1 bis 5, **dadurch gekennzeichnet, dass** das Thermo-Fellteil ein Feinhaarfellteil (7) ist.

7. Thermo-Fellteil nach Anspruch 6, **dadurch gekennzeichnet, dass** das Feinhaarfellteil (7) ein natürliches Feinhaarfellteil, insbesondere ein Schaffell oder ein Katzenfell ist.

8. Thermo-Fellteil nach einem der Ansprüche 1 bis 7, **dadurch gekennzeichnet, dass** das Thermo-Fellteil (7) zu einem wenigstens zweilagigen Thermoeinlageteil (30) oder Thermo-Bandagenteil (1) oder Thermo-Bekleidungsteil weitergebildet ist, wobei eine die Lederhautseite (29) zumindest teilweise, vorzugsweise vollflächig abdeckende Trägerschicht (3) auf der Lederhautseite (29) mit dem Thermo-Fellteil (7) zumindest in Teilbereichen verbunden, vorzugsweise vernäht oder verklebt, ist und das Thermo-Fellteil (7) in der Gebrauchsstellung mit der Fellhaarseite (31) an der zugeordneten Körperfläche des Menschen oder Tieres anliegt, vorzugsweise unmittelbar anliegt.

9. Thermo-Fellteil nach Anspruch 8, **dadurch gekennzeichnet, dass** die Trägerschicht (3) aus einem Textilstoff und/oder einem Kernleder gebildet ist.

10. Thermo-Fellteil nach Anspruch 8 oder 9, **dadurch gekennzeichnet, dass** das Thermo-Einlageteil eine Schuh-Einlegesohle (30) ist.

11. Thermo-Fellteil nach Anspruch 8 oder 9, **dadurch gekennzeichnet, dass** das Thermo-Bekleidungsteil ein Jackenteil oder Hosenteil oder Kopfbedeckungsteil ist, die gegebenenfalls mit Fixiergürteln und Spannbändern enganliegend getragen werden können.

12. Thermo-Fellteil nach Anspruch 8 oder 9, **dadurch gekennzeichnet, dass** das Thermo-Bandagenteil eine Beingamasche oder ein Fußbandagenteil oder ein Kniebandagenteil oder ein Handbandagenteil oder ein Ellbogenbandagenteil oder Armbandagenteil oder ein Nierengurt oder ein Halsband oder ein Stirnband oder eine Kombination aus den vorstehenden Teilen ist.

13. Thermo-Fellteil nach Anspruch 11, **dadurch gekennzeichnet, dass** die Beingamasche eine Pferde-Thermogamasche (1) ist, die mantelartig um ein Bein eines Pferdes, insbesondere ein Vorderbein zu legen ist, wobei die Pferde-Thermogamasche (1) im angelegten Zustand längsrandseitig überlappt und mit wenigstens einem Querverschluss, vorzugsweise mit drei gegeneinander versetzten, an einer Trägerschicht (3) aus Kernieder angebrachten Klettverschlüssen (17) fixierbar ist.
